# FASCICULE DE BREVET EUROPEEN

(11) **EP 1 504 953 B1**
(45) Date de publication et mention de la délivrance du brevet: **23.01.2013**
(21) Numéro de dépôt: 04364052.3
(22) Date de dépôt: 20.07.2004
(51) Int. Cl.: B60P 1/28

(54) **Dispositif de montage d'une benne et véhicule muni de celui-ci**
Montagevorrichtung eines Kippbehälters und Kraftfahrzeug mit solcher Vorrichtung
Mounting device for a dump bucket and vehicle equipped with such a device

(30) Priorité: 21.07.2003 FR 0308873
(43) Date de publication de la demande: 09.02.2005
(73) Titulaire: C.I. 85, 85140 Les Essarts (FR)
(72) Inventeur: Sauvion, Jean-Pierre, 85260 L'herbergement (FR)
(74) Mandataire: Chaillot, Geneviève

(56) Documents cités:
- EP-A- 0 049 482
- GB-A- 681 997
- JP-A- 55 029 638

## Description

L'invention concerne un dispositif de montage d'une benne sur un châssis roulant, ainsi qu'un camion comportant ce dispositif de montage.

Un domaine d'application de l'invention est notamment les camions à benne, les semi-remorques à benne, les remorques à benne, pour le transport de matériaux divers, granulaires, ou sous la forme de blocs (enrochements).

La benne est classiquement montée basculante sur une articulation transversale pour pouvoir passer de la position abaissée sur un faux-châssis à une position levée vers l'arrière, permettant par exemple son vidage, grâce à des moyens de levage.

Dans le document EP-A-1 162 110, la benne est levée par deux vérins latéraux prenant appui entre les deux essieux arrière.

Le document GB-A-681 997 concerne un dispositif selon le préambule de la revendication 1.

L'un des problèmes rencontrés pour les bennes basculant vers l'arrière est la poussée devant être exercée par les moyens de levage sur celles-ci.

En effet, il faut éviter que le levage et l'abaissement de la benne ne la vrillent et il faut que ce levage se fasse correctement par rapport au châssis.

L'invention vise à obtenir un dispositif de montage d'une benne, ainsi qu'un camion comportant ce dispositif, qui soient optimisés et résolvent les inconvénients de l'état de la technique.

A cet effet, un premier objet de l'invention est un dispositif de montage selon la revendication 1.

Grâce à l'invention, la poussée exercée par les moyens de levage sur la benne est moins importante que dans les dispositifs classiques, ce qui permet de réaliser une économie en énergie d'actionnement de ces moyens, qui doit être fournie par le véhicule sur lequel ce dispositif de montage est présent.

Ainsi, pour un dispositif à deux vérins tel que selon le document EP-A-1 162 110, qui nécessite une poussée de 85 tonnes, le dispositif de montage suivant l'invention ne nécessite qu'une poussée de 40 tonnes pour soulever la benne, dans le cas où les moyens de levage et d'abaissement sont mis en oeuvre par deux vérins latéraux droit et gauche.

En outre, la direction de la poussée exercée par les moyens de levage sur la benne est également optimisée grâce à la disposition indiquée ci-dessus, qui permet d'empêcher dans une large mesure un vrillage et une déformation de la benne et du faux-châssis au cours du levage ou de l'abaissement de la benne.

Les revendications 2 à 14 ont pour objet d'autres caractéristiques de l'invention.

Un deuxième objet de l'invention est un véhicule à benne basculante selon la revendication 15.

L'invention sera mieux comprise à la lecture de la description qui va suivre, donnée uniquement à titre d'exemple non limitatif en référence aux dessins annexés, sur lesquels :
- la figure 1 représente schématiquement un camion à benne vu de profil du côté gauche et benne abaissée, dans lequel est utilisé un non revendiqué, premier mode de réalisation de l'invention,
- la figure 2 représente schématiquement en perspective éclatée le non revendiqué, premier mode de réalisation de l'invention du dispositif de montage de la benne suivant la figure 1 en position levée correspondante,
- la figure 3 représente schématiquement un camion à benne vu de profil du côté gauche et benne abaissée, dans lequel est utilisé un deuxième mode de réalisation de l'invention,
- la figure 4 représente schématiquement le deuxième mode de réalisation de l'invention du dispositif de montage de la benne suivant la figure 3 en vue de dessus, dans laquelle la benne et ses moyens de levage n'ont pas été représentés.

Sur les figures, la direction longitudinale et horizontale de l'arrière vers l'avant porte la référence X, la direction transversale et horizontale de la droite vers la gauche porte la référence Y et la direction verticale ascendante, orthogonale aux deux précédentes, porte la référence Z.

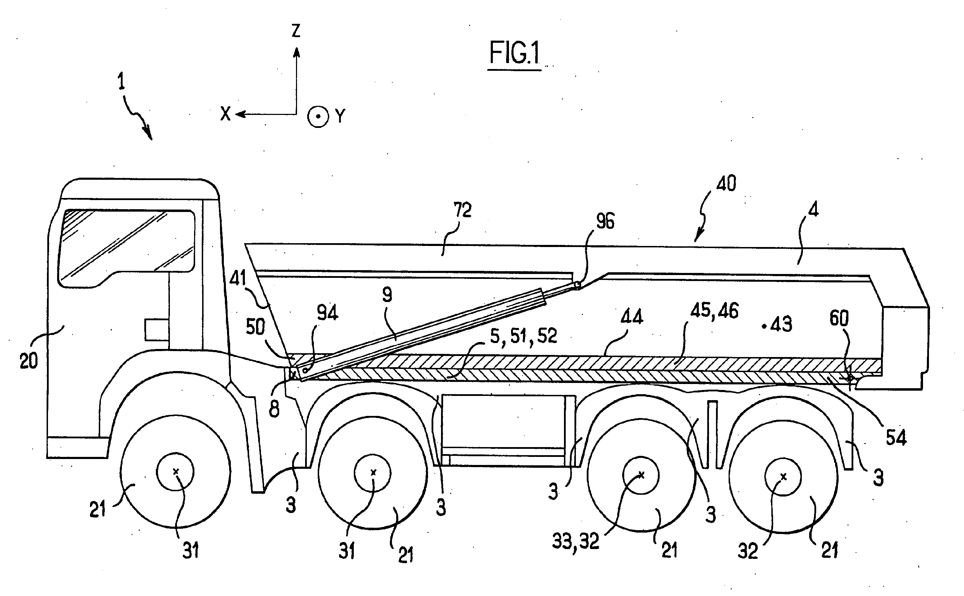

Aux figures 1 à 4, un camion-benne 1 comporte une cabine avant 20, un châssis 3, roulant sur le sol au moyen de roues 21 supportées par des essieux avant 31 et arrières 32, et une benne 4.

La benne 4 comporte un compartiment intérieur 40 destiné à contenir des matériaux à transporter, qui est délimité par une paroi avant 41, des parois latérales droite et gauche 42 et 43 et une paroi inférieure 44. Les parois droite et gauche 42 et 43 et la paroi 44 ont par exemple ensemble une forme semi-cylindrique circulaire de l'avant vers l'arrière mais pourraient également avoir une forme plane rectangulaire, pour former une paroi avant et un compartiment intérieur 40 en U ayant des angles droits ou des angles obtus entre la paroi inférieure et les parois latérales et/ou des angles droits ou des angles obtus entre la paroi inférieure et la paroi avant. Une porte non représentée peut également être prévue à l'arrière de la benne pour ouvrir ou fermer l'ouverture arrière formée par les parois 42, 43 et 44, ou la benne est exempte de porte et l'ouverture arrière est maintenue béante.

Sous la paroi inférieure 44 sont fixés deux longerons longitudinaux 45 et 46 par lesquels la benne 4 repose sur un faux-châssis 5 en position abaissée, le faux-châssis 5 comportant à cet effet des parties 51, 52 dédiées au support de la benne 4 en position abaissée, lesquelles parties 51, 52 sont distinctes de l'axe 60 d'articulation de la benne et d'une partie avant 8 du faux-châssis, la paroi inférieure 44 et les longerons 45 et 46 étant alors sensiblement à l'horizontale pour le déplacement du camion et le transport de matériaux dans la benne 4. Aux figures, les termes avant et arrière s'entendent dans la position abaissée de la benne et les articulations sont représentées par des doubles flèches en traits interrompus.

Le faux-châssis 5 est fixé sur le châssis 3 par des moyens appropriés, par exemple par boulonnage. Le faux-châssis 5 est par exemple, ainsi que représenté aux figures, du type continu de l'arrière vers l'avant, comportant deux longerons longitudinaux droit et gauche 51 et 52 disposés transversalement en face des longerons droit et gauche 45 et 46 inférieurs de la benne 4, afin qu'en position abaissée, les longerons 45 et 46 reposent respectivement sur les longerons 51 et 52.

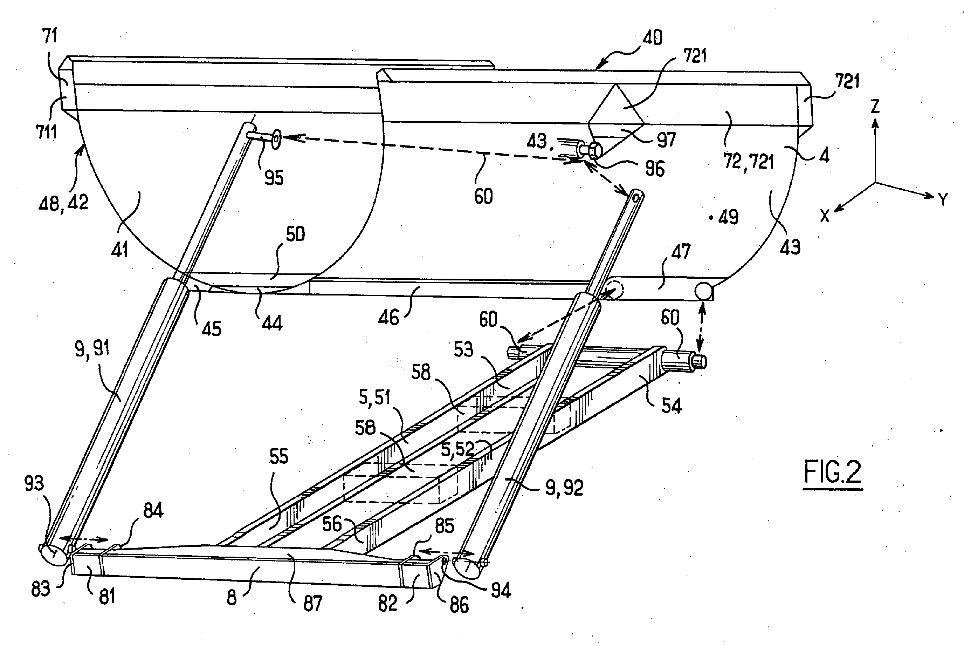

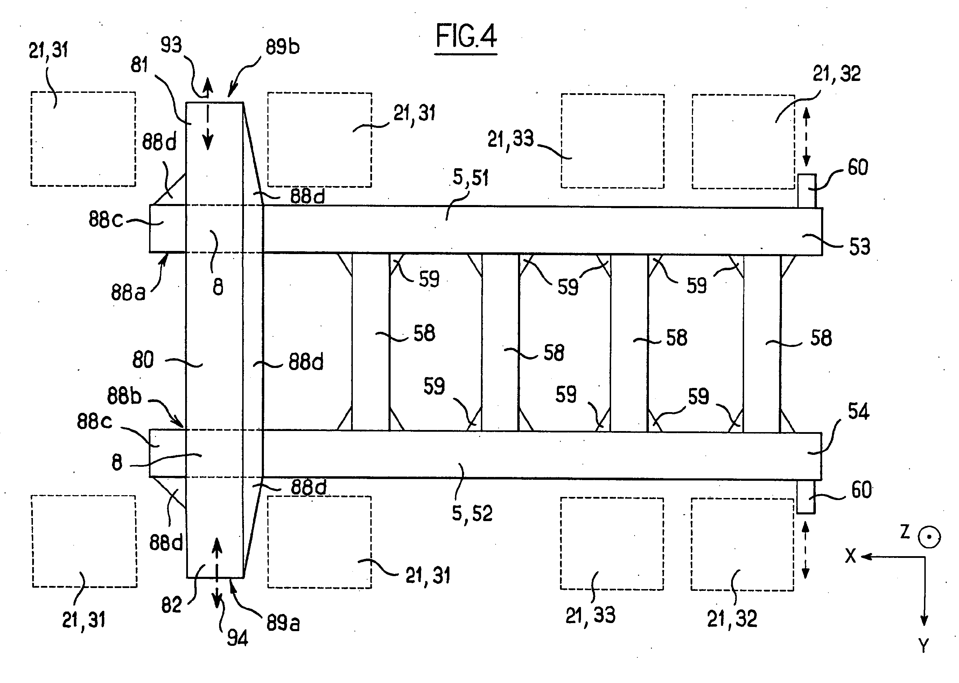

A leur partie arrière 53 et 54, les longerons 51 et 52 du faux-châssis 5 supportent l'axe 60 d'articulation transversal en prise avec une partie inférieure arrière 47 de la benne 4, par exemple à l'arrière de ses longerons 45 et 46. L'axe 60 d'articulation est par exemple formé par un tube transversal fixé aux parties 53 et 54, aux extrémités desquelles deux bagues reliées à la partie 47 arrière de la benne 4 sont montées tournantes. Une ou plusieurs barres ou traverses latérales 58, représentées en traits interrompus à la figure 2 et en traits pleins à la figure 4, peuvent être fixées entre les longerons 51 et 52 pour leur assemblage l'un par rapport à l'autre. Des nervures 59 supplémentaires de fixation aux longerons 51 et 52 peuvent être prévues au bout des barres 58.

Aux figures 1 et 2, les parties avant 55 et 56 des longerons droit et gauche 51 et 52 du faux-châssis 5 sont fixées à une traverse 8 transversale de support de moyens 9 de levage et d'abaissement de la benne 4 par ses côtés latéraux droit et gauche 48 et 49.

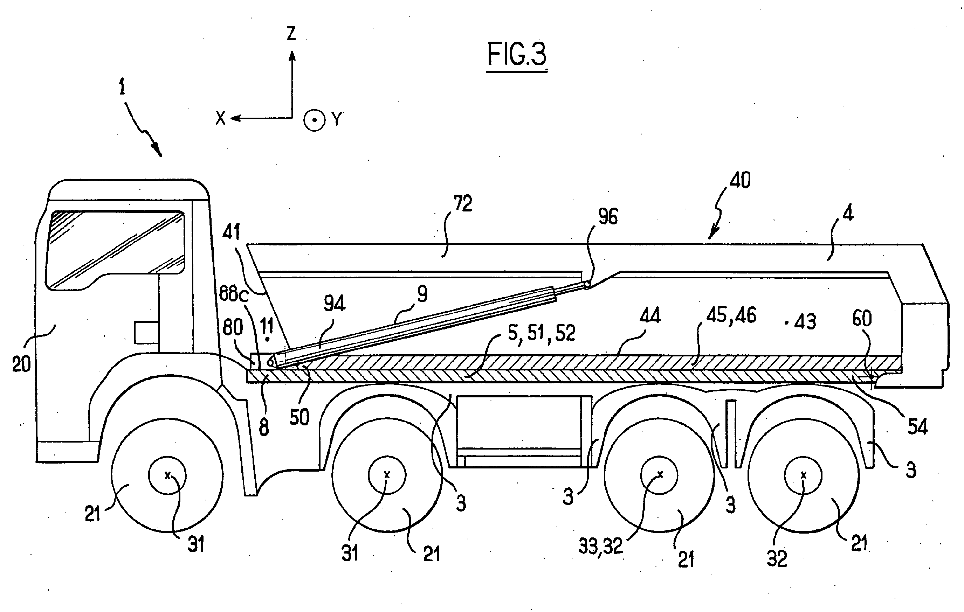

Dans les réalisations représentées aux figures 1 à 4, ces moyens 9 de levage et d'abaissement de la benne sont par exemple formés par deux vérins latéraux 91 et 92 droit et gauche, qui sont articulés d'une part par des premiers axes 93 et 94 sur la traverse 8 aux figures 1 et 2 ou sur un ensemble 80 de support aux figures 3 et 4 et d'autre part, par deux axes droit et gauche 95 et 96 sur les côtés droit et gauche 48 et 49 de la benne 4. Les axes 93 et 94 sont par exemple prévus aux extrémités transversales droite et gauche 81 et 82 de la traverse 8 ou de l'ensemble 80, et sur l'extrémité inférieure du fût des vérins, entre deux joues 83, 84 reliées à l'avant pour l'axe 93 à l'extrémité droite 81 et entre deux joues 85, 86 reliées à l'avant pour l'axe 94 à l'extrémité gauche 82. Les axes 95 et 96 sont prévus à l'extrémité supérieure des tiges des vérins, montées coulissantes dans les fûts.

Les axes d'articulation 93 et 94 des vérins 91 et 92 sur le faux-châssis 5 sont positionnés sur celui-ci devant le ou les essieux 32 arrière du châssis 3, c'est-à-dire devant l'essieu arrière 33 situé le plus en avant, et par exemple au moins 1000 millimètres devant ceux-ci. Le ou les essieux arrières 32 peuvent être définis dans ce cas comme étant séparés du ou des essieux avant 31 par une distance longitudinale, qui est plus grande que celle séparant les essieux avant 31 entre eux lorsque plusieurs essieux avant 31 sont prévus ainsi que représenté aux figures 1, 3 et 4, et qui est plus grande que celle séparant les essieux arrière 32 entre eux lorsque plusieurs essieux arrière 32 sont prévus ainsi que représenté aux figures 1, 3 et 4. Les axes d'articulation 95 et 96 des vérins 91 et 92 à la benne 4 sont par exemple également positionnés sous celle-ci, de manière à être situés, en position abaissée de la benne 4, devant le ou les essieux 32 arrière du châssis 3, c'est-à-dire devant l'essieu arrière 33 situé le plus en avant.

Les axes d'articulation 93 et 94 des vérins 91 et 92 sur le faux-châssis 5 sont positionnés sur celui-ci plus près du ou des essieux avant 31 du châssis 3 que du ou des essieux 32 arrière du châssis 3, par exemple entre ou au-dessus des essieux avant 31 lorsque celui-ci en comporte deux, ou au-dessus ou entre les deux essieux avant 31 situés les plus en arrière lorsque plus de deux essieux avant 31 sont prévus.

Les axes 93 et 94 d'une part et 95 et 96 d'autre part des vérins 91 et 92 sont par exemple alignés transversalement pour un déplacement des vérins 91 et 92 dans un plan longitudinal sensiblement vertical lors du levage et de l'abaissement de la benne, ainsi que cela est représenté. Les axes d'articulation des vérins 91 et 92 au faux-châssis 5 et à la benne 4 peuvent également être non alignés transversalement et les extrémités des vérins situées à proximité de ces axes peuvent être décalées transversalement pour un déplacement des vérins dans un plan incliné par rapport au plan longitudinal vertical lors du levage et de l'abaissement de la benne, par exemple pour que les axes 93 et 94 soient plus écartés l'un de l'autre que les axes 95 et 96.

Ainsi que cela est représenté aux figures 1 et 2, la partie avant 8 du faux-châssis, servant au support des moyens 9 de levage et d'abaissement, est par exemple positionnée sous l'extrémité inférieure avant 50 de la benne 4, formée par le bas de sa paroi avant 41 ou par l'avant et le bas de ses longerons 45 et 46. La partie avant 8 du faux-châssis, servant au support des moyens 9 de levage et d'abaissement, est par exemple à la même hauteur que et dans le prolongement avant des parties 51, 52 de celui-ci supportant la benne 4 abaissée. La benne 4 abaissée repose alors également par sa partie inférieure avant 50 sur la partie médiane 87 de cette partie avant 8, les côtés droit et gauche 81 et 82 de la partie 8 supportant alors les moyens 9 de levage et d'abaissement. A la figure 2, cette partie médiane 87 est par exemple formée par un plat supportant en position abaissée la partie 50 de la benne 4, également plate lorsque cette partie 50 est formée de l'avant et le bas des longerons 45 et 46.

On décrit ci-dessous le mode de réalisation représenté aux figures 3 et 4, dans lequel le faux-châssis 5 dépasse, par le dessous, de l'avant de la benne 4 en position abaissée.

La partie avant 8 du faux-châssis 5 se trouve devant l'extrémité inférieure avant 50 de la benne 4, formée par le bas de sa paroi avant 41 ou par l'avant et le bas de ses longerons 45 et 46.

Les moyens 9 de levage et d'abaissement peuvent être montés directement sur cette partie avant 8 ou, ainsi que cela est représenté aux figures 3 et 4, sur l'ensemble 80 de support fixé sur la surface supérieure 88c de la partie avant 8. Cette partie avant 8 n'est plus formée par une traverse transversale comme aux figures 1 et 2, mais par l'avant des longerons 51 et 52 aux figures 3 et 4. L'ensemble 80 n'est pas touché par la benne 4 et est à distance de celle-ci, y compris en position abaissée. L'ensemble 80 n'est pas recouvert par le bas de la benne 4 et est libre d'accès, y compris en position abaissée, où un espace libre 11 subsiste au-dessus de celui-ci.

L'ensemble 80 de support des moyens 9 de levage et d'abaissement est rapporté sur l'avant des longerons 51 et 52 par exemple par des organes 88a, 88b de fixation amovibles, qui peuvent être par exemple des boulonnages ou des sardines, pour être indépendant du faux-châssis 5. Ces organes de fixation 88a, 88b pourraient également être des soudures. De même, des organes 89a, 89b de montage amovibles peuvent être prévus pour monter sur l'ensemble 20 les moyens 9, à savoir dans l'exemple représenté aux figures 3 et 4 les axes 93 et 94 d'articulation droit et gauche des vérins 91, 92 droit et gauche. L'ensemble de support 80 peut ainsi faire partie d'un kit prêt à être monté sur tout type de faux-châssis 5 ou de châssis 3, en utilisant les organes 88a, 88b de fixation et les organes 89a, 89b de montage, prévus dans ce kit ou prévus sur le camion. Ce kit peut servir à équiper les camions déjà munis de vérins de levage de benne prenant appui sous la benne, comme par exemple ceux selon le mode de réalisation des figures 1 et 2 ou ceux dont les vérins prennent appui à proximité du ou des essieu(x) arrière ou au milieu de ceux-ci, dans le cas où ces camions disposent d'un espace de montage suffisant devant la benne et sur la partie avant de leur faux-châssis ou de leur châssis, pour y mettre le point d'appui des vérins.

L'ensemble 80 de support a par exemple la forme d'un caisson de poutre s'étendant transversalement devant la benne 4 sur les longerons 51 et 52. Des nervures 88d supplémentaires de fixation à la partie avant 8 du faux-châssis 5 peuvent être prévues sur le caisson.

Les moyens 9 de levage et d'abaissement agissent par exemple, ainsi que représenté aux figures 1 à 4, sur les côtés supérieurs droit et gauche 71 et 72 de la benne 4. Ces côtés 71 et 72 sont par exemple formés par des rebords 711 et 721 des parois droite et gauche 42 et 43 de la benne 4 vers le bas et vers la droite et la gauche. Les moyens 9 de levage et d'abaissement agissent par exemple sensiblement au milieu, pris de l'avant vers l'arrière, du haut de la benne 4, ainsi que représenté aux figures 1 et 3. Les axes 95 et 96 sont par exemple chacun montés entre une plaque 97 prolongeant vers le bas les rebords 711 et 721 et la paroi 42, 43.

En position abaissée, les moyens 9 de levage et d'abaissement sont situés sur les deux côtés droit et gauche 48 et 49 de la benne 4.

L'invention est applicable à des camions, des remorques, des semi-remorques et à ces mêmes véhicules équipés d'appareils à bras de levage, à câbles ou à bras de levage.

## Revendications

1. Dispositif de montage d'une benne (4) sur un châssis (3) roulant, comportant un faux-châssis (5) de repos de la benne (4) en position abaissée, sur lequel sont montées au moins une articulation (60) transversale arrière de la benne (4) entre l'une et l'autre de la position abaissée et d'une position levée vers l'arrière et des moyens (9) de levage et d'abaissement de la benne (4),
les moyens (9) de levage et d'abaissement sont supportés sur une partie avant (8) du faux-châssis (5), sur deux côtés droit et gauche (81, 82) de celui-ci pour agir sur les côtés droit et gauche (48, 49) de la benne (4),
**caractérisé en ce que** :
ladite partie avant (8) du faux-châssis (5), sur laquelle sont supportés les moyens (9) de levage et d'abaissement, est située devant la benne (4), et
un ensemble (80) de support des moyens (9) de levage et d'abaissement est fixé sur la surface supérieure (88c) de ladite partie avant (8) du faux-châssis (5), l'ensemble (80) de support étant formé par un caisson transversal (80), dont les deux côtés droit et gauche (81, 82) supportent les moyens (9) de levage et d'abaissement.

2. Dispositif de montage suivant la revendication 1, **caractérisé en ce que** le faux-châssis (5) comporte au moins une partie (51, 52) pour supporter la benne (4) en position abaissée, autre que l'articulation (60) transversale arrière de la benne (4) et autre que ladite partie avant (8) sur laquelle sont supportés les moyens (9) de levage et d'abaissement.

3. Dispositif de montage suivant la revendication 2, **caractérisé en ce que** ladite partie (51, 52) du faux-châssis (5), qui sert au support de la benne (4) en position abaissée et qui est autre que l'articulation (60) transversale arrière de la benne (4) et autre que la partie avant (8) sur laquelle sont supportés les moyens (9) de levage et d'abaissement, est située entre ladite partie avant (8) et l'articulation (60) transversale arrière de la benne (4).

4. Dispositif de montage suivant l'une des revendications 1 à 3, **caractérisé en ce que** l'ensemble (80) de support des moyens (9) de levage et d'abaissement est fixé par des organes (88a, 88b) de fixation amovibles sur la surface supérieure de ladite partie avant (8) du faux-châssis (5), et des organes (89a, 89b) de montage amovibles des moyens (9) de levage et d'abaissement sur l'ensemble (80) de support sont prévus.

5. Dispositif de montage suivant l'une des revendications 1 à 4, **caractérisé en ce que** l'ensemble (80) de support est un kit.

6. Dispositif de montage suivant l'une quelconque des revendications précédentes, **caractérisé en ce que** le faux-châssis (5) est continu de l'avant vers l'arrière.

7. Dispositif de montage suivant l'une quelconque des revendications précédentes, **caractérisé en ce que** le faux-châssis (5) comporte deux longerons (51, 52) droit et gauche s'étendant de l'avant vers l'arrière de ladite partie avant (8) à l'articulation (60).

8. Dispositif de montage suivant l'une quelconque des revendications précédentes, **caractérisé en ce que** la benne comporte deux longerons longitudinaux (45, 46) par lesquels la benne (4) repose sur le faux-châssis (5) en position abaissée.

9. Dispositif de montage suivant les revendications 7 et 8, **caractérisé en ce qu'**en position abaissée, les deux longerons longitudinaux droit et gauche (51, 52) du faux-châssis (5) sont disposés transversalement en face des longerons droit et gauche (45, 46) inférieurs de la benne (4), afin qu'en position abaissée, les longerons droit et gauche (45, 46) inférieurs de la benne (4) reposent respectivement sur les longerons longitudinaux droit et gauche (51, 52) du faux-châssis (5).

10. Dispositif de montage suivant l'une quelconque des revendications précédentes, **caractérisé en ce que** la partie avant (8) du faux-châssis, sur laquelle sont supportés les moyens (9) de levage et d'abaissement, est située devant le ou les essieux arrière (32, 33).

11. Dispositif de montage suivant l'une quelconque des revendications précédentes, **caractérisé en ce que** le point d'appui (93, 94) des moyens (9) de levage et d'abaissement sur la benne est situé devant le ou les essieux arrière (32, 33) en position abaissée.

12. Dispositif de montage suivant l'une quelconque des revendications précédentes, **caractérisé en ce que** les moyens (9) de levage et d'abaissement sont formés par deux vérins (91, 92) droit et gauche, articulés d'une part sur la partie avant (8) du faux-châssis et d'autre part sur la benne (4).

13. Dispositif de montage suivant l'une quelconque des revendications précédentes, **caractérisé en ce que** le point d'appui des moyens (9) de levage et d'abaissement sur la benne (4) est situé sur deux côtés supérieurs (71, 72) droit et gauche de celle-ci.

14. Dispositif de montage suivant l'une quelconque des revendications précédentes, **caractérisé en ce que** la partie avant (8) du faux-châssis, sur laquelle sont supportés les moyens (9) de levage et d'abaissement, est située au moins à 1000 millimètres devant le ou les essieux arrière (32, 33).

15. Véhicule à benne (4) basculante sur châssis (3) roulant, équipé d'un dispositif de montage de la benne sur le châssis roulant suivant l'une quelconque des revendications précédentes.

## Claims

1. - A mounting device for a dump body (4) on a rolling chassis (3), comprising an underframe (5) for resting the dump body (4) in the lowered position, on which are mounted at least one rear transversal joint (60) of the dump body (4) between the one and the other of the lowered position and a rearwardly raised position and lifting and lowering means (9) of the dump body (4),
the lifting and lowering means (9) are supported on a front portion (8) of the underframe (5), on two right and left sides (81, 82) thereof to operate on the right and left sides (48, 49) of the dump body (4),
**characterized in that**:
said front portion (8) of the underframe (5), on which the lifting and lowering means (9) are supported, is located in front of the dump body (4); and
a supporting assembly (80) of the lifting and lowering means (9) is attached on the upper surface (88c) of said front portion (8) of the underframe (5), the supporting assembly (80) being formed by a transversal caisson (80), both right and left sides (81, 82) of which support the lifting and lowering means (9).

2. - A mouting device according to claim 1, **characterized in that** the underframe (5) comprises at least one portion (51, 52) for supporting the dump body (4) in the lowered position, other than the rear transversal joint (60) of the dump body (4) and other than said front portion (8) on which the lifting and lowering means (9) are supported.

3. - A mouting device according to claim 2, **characterized in that** said portion (51, 52) of the underframe (5), which serves for supporting the dump body (4) in the lowered position and which is other than the rear transversal joint (60) of the dump body (4) and other than the front portion (8) on which the lifting and lowering means (9) are supported, is located between said front portion (8) and the rear transversal joint (60) of the dump body (4).

4. - A mouting device according to one of claims 1 to 3, **characterized in that** the supporting assembly (80) of the lifting and lowering means (9) is attached by removable attaching members (88a, 88b) on the upper surface of said front portion (8) of the underframe (5), and removable mounting members (89a, 89b) of the lifting and lowering means (9) on the supporting assembly (80) are provided.

5. - A mouting device according to one of claims 1 to 4, **characterized in that** the supporting assembly (80) is a kit.

6. - A mouting device according to any one of the preceding claims, **characterized in that** the underframe (5) is continuous from front to rear.

7. - A mouting device according to any one of the preceding claims, **characterized in that** the underframe (5) comprises two right and left side-members (51, 52) extending from front to rear from said front portion (8) to the joint (60).

8. - A mouting device according to any one of the preceding claims, **characterized in that** the dump body comprises two longitudinal side-members (45, 46) through which the dump body (4) rests on the underframe (5) in the lowered position.

9. - A mouting device according to claims 7 and 8, **characterized in that** in the lowered position both right and left longitudinal side-members (51, 52) of the underframe (5) are transversely arranged facing the lower right and left side-members (45, 46) of the dump body (4), so that in the lowered position the lower right and left side-members (45, 46) of the dump body (4) rest on the right and left longitudinal side-members (51, 52) of the underframe (5), respectively.

10. - A mouting device according to any one of the preceding claims, **characterized in that** the front portion (8) of the underframe (5), on which the lifting and lowering means (9) are supported, is located in front of the one or more rear axles (32, 33).

11. - A mouting device according to any one of the preceding claims, **characterized in that** the fulcrum (93, 94) of the lifting and lowering means (9) on the dump body is located in front of the one or more rear axles (32, 33) in the lowered position.

12. - A mouting device according to any one of the preceding claims, **characterized in that** the lifting and lowering means (9) are formed by two right and left jacks (91, 92), articulated on the one hand on the front portion (8) of the underframe and on the other hand on the dump body (4).

13. - A mouting device according to any one of the preceding claims, **characterized in that** the fulcrum of the lifting and lowering means (9) on the dump body (4) is located on two right and left upper sides (71, 72) thereof.

14. - A mouting device according to any one of the preceding claims, **characterized in that** the front portion (8) of the underframe, on which the lifting and lowering means (9) are supported, is located at least 1000 millimeters in front of the one or more rear axles (32, 33).

15. - A vehicle equipped with a dump body (4) on a rolling chassis (3), provided with a mounting device for the dump body on the rolling chassis according to any one of the preceding claims.

## Patentansprüche

1. - Vorrichtung zur Montage eines Behälters (4) auf einem rollenden Fahrgestell (3), umfassend einen Fahrschemel (5) zum Ruhen des Behälters (4) in abgesenkter Position, auf der mindestens ein hinteres querliegendes Gelenk (60) des Behälters (4) zwischen der abgesenkten Position und einer angehobenen Position nach hinten und Mittel (9) zum Anheben und Absenken des Behälters (9) montiert sind,
wobei die Mittel (9) zum Anheben und Absenken auf einem vorderen Teil (8) des Fahrschemels (5) sowohl an der rechten als auch an der linken Seite (81, 82) von diesem abgestützt sind, um auf die rechte und linke Seite (48, 49) des Behälters (4) einwirken zu können,
**dadurch gekennzeichnet, dass**:
der vordere Teil (8) des Fahrschemels (5), auf dem die Mittel (9) zum Anheben und Absenken abgestützt sind, vor dem Behälter (4) angeordnet ist, und
eine Gesamtheit (80) zum Abstützen der Mittel (9) zum Anheben und Absenken auf der oberen Fläche (88c) des vorderen Teils (8) des Fahrschemels (5) befestigt ist, wobei die Gesamtheit (80) zum Abstützen durch einen querliegenden Kasten (80) gebildet wird, dessen rechte und linke Seite (81, 82) die Mittel (9) zum Anheben und Absenken abstützen.

2. - Vorrichtung zur Montage nach Anspruch 1, **dadurch gekennzeichnet, dass** der Fahrschemel (5) mindestens einen Teil (51, 52) zum Abstützen des Behälters (4) in abgesenkter Position umfasst, der nicht das hintere querliegende Gelenk (60) des Behälters (4) und nicht der vordere Teil (8), auf dem die Mittel (9) zum Anheben und Absenken abgestützt sind, ist.

3. - Vorrichtung zur Montage nach Anspruch 2, **dadurch gekennzeichnet, dass** der Teil (51, 52) des Fahrschemels (5), der zum Abstützen des Behälters (4) in abgesenkter Position dient und nicht das hintere querliegende Gelenk (60) des Behälters (4) und nicht der vordere Teil (8), auf dem die Mittel (9) zum Anheben und Absenken abgestützt sind, zwischen dem vorderen Teil (8) und dem hinteren querliegenden Gelenk (60) des Behälters (4) angeordnet ist.

4. - Vorrichtung zur Montage nach einem der Ansprüche 1 bis 3, **dadurch gekennzeichnet, dass** die Gesamtheit (80) zum Abstützen der Mittel (9) zum Anheben und Absenken durch die abnehmbaren Teile (88a, 88b) zum Befestigen auf der oberen Fläche des vorderen Teils (8) des Fahrschemels (5) und die abnehmbaren Teile (89a, 89b) zur Montage der Mittel (9) zum Anheben und Absenken auf der Gesamtheit (80) zum Abstützen vorgesehen sind.

5. - Vorrichtung zur Montage nach einem der Ansprüche 1 bis 4, **dadurch gekennzeichnet, dass** die Gesamtheit (80) zum Abstützen ein Satz ist.

6. - Vorrichtung zur Montage nach einem der vorhergehenden Ansprüche, **dadurch gekennzeichnet, dass** der Fahrschemel (5) von vorne nach hinten durchgehend ist.

7. - Vorrichtung zur Montage nach einem der vorhergehenden Ansprüche, **dadurch gekennzeichnet, dass** der Fahrschemel (5) zwei Holme (51, 52) rechts und links umfasst, die sich von vorne nach hinten vom vorderen Teil (8) bis zum Gelenk (60) erstrecken.

8. - Vorrichtung zur Montage nach einem der vorhergehenden Ansprüche, **dadurch gekennzeichnet, dass** der Behälter zwei Längsholme (45, 46) umfasst, durch die der Behälter (4) auf dem Fahrschemel (5) in abgesenkter Position ruht.

9. - Vorrichtung zur Montage nach den Ansprüchen 7 und 8, **dadurch gekennzeichnet, dass** in abgesenkter Position die beiden Längsholme rechts und links (51, 52) des Fahrschemels (5) quer gegenüber den unteren Holmen rechts und links (45, 46) des Behälters (4) angeordnet sind, so dass in abgesenkter Position die unteren Holme rechts und links (45, 46) des Behälters (4) jeweils auf den Längsholmen rechts und links (51, 52) des Fahrschemels ruhen.

10. - Vorrichtung zur Montage nach einem der vorhergehenden Ansprüche, **dadurch gekennzeichnet, dass** der vordere Teil (8) des Fahrschemels, auf dem die Mittel (9) zum Anheben und Absenken abgestützt sind, vor der oder den Hinterachse(n) (32, 33) angeordnet ist.

11. - Vorrichtung zur Montage nach einem der vorhergehenden Ansprüche, **dadurch gekennzeichnet, dass** der Abstützpunkt (93, 94) der Mittel (9) zum Anheben und Absenken auf dem Behälter vor der oder den Hinterachse(n) (32, 33) in abgesenkter Position angeordnet ist.

12. - Vorrichtung zur Montage nach einem der vorhergehenden Ansprüche, **dadurch gekennzeichnet, dass** die Mittel (9) zum Anheben und Absenken durch zwei Hubzylinder (91, 92) rechts und links gebildet werden, die einerseits mit Gelenken auf dem vorderen Teil (8) des Fahrschemels und andererseits auf dem Behälter (4) befestigt sind.

13. - Vorrichtung zur Montage nach einem der vorhergehenden Ansprüche, **dadurch gekennzeichnet, dass** der Abstützpunkt der Mittel (9) zum Anheben und Absenken auf dem Behälter (4) auf den beiden oberen Seiten (71, 72) rechts und links von dieser angeordnet ist.

14. - Vorrichtung zur Montage nach einem der vorhergehenden Ansprüche, **dadurch gekennzeichnet, dass** der vordere Teil (8) des Fahrschemels, auf dem die Mittel (9) zum Anheben und Absenken abgestützt sind, mindestens 1 000 mm vor der oder den Hinterachse(n) (32, 33) angeordnet ist.

15. - Fahrzeug mit Kippbehälter (4) auf einem rollenden Fahrgestell (3), ausgestattet mit einer Vorrichtung zur Montage des Behälters auf dem rollenden Fahrgestell nach einem der vorhergehenden Ansprüche.
